(19) Europäisches Patentamt
European Patent Office
Office européen des brevets

(11) Veröffentlichungsnummer: **0 077 758**
**B1**

(12) # EUROPÄISCHE PATENTSCHRIFT

(45) Veröffentlichungstag der Patentschrift: **02.04.86**

(51) Int. Cl.⁴: **C 08 G 59/38**, C 08 G 59/06

(21) Anmeldenummer: **82810425.7**

(22) Anmeldetag: **13.10.82**

(54) **Feste Epoxidharzsysteme.**

(30) Priorität: **19.10.81 US 312600**

(43) Veröffentlichungstag der Anmeldung: **27.04.83 Patentblatt 83/17**

(45) Bekanntmachung des Hinweises auf die Patenterteilung: **02.04.86 Patentblatt 86/14**

(84) Benannte Vertragsstaaten: **CH DE FR GB LI NL**

(56) Entgegenhaltungen:
**EP - A - 0 006 535**
**DE - A - 1 643 309**
**DE - A - 2 505 345**
**FR - A - 1 523 850**
**GB - A - 2 055 843**
**US - A - 3 100 756**

(73) Patentinhaber: **CIBA-GEIGY AG, Klybeckstrasse 141, CH-4002 Basel (CH)**

(72) Erfinder: **Helfand, David, 3792 Wildwood Street, Yorktown Heights New York 10598 (US)**
Erfinder: **Sellers, Ralph F., 71 Smith Road, Somerset New Jersey 08873 (US)**

**EP 0 077 758 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Es wurden verschiedene feste Epoxiharze entwickelt, mit denen man einen weiten Bereich von Eigenschaften, wie dem Erweichungspunkt und der Schmelzviskosität, erzielen kann, um die Auswahl zu verbessern und die Brauchbarkeit von verfügbaren Epoxiharzen für Formmassen und Endzwecke zu erhöhen. Unter den in der Herstellung von Formmassenqualitäten verwendeten festen Epoxiharzen finden sich difunktionelle Harze auf Grundlage von Vorverlängerungsprodukten von Bisphenol-A-diglycidyläthern, sowie verschiedene multifunktionelle Harze wie Epoxinovolake, Epoxikresolnovolake, Triglycidylisocyanurat und Tetra-(p-glydidyloxyphenyl)-äthan.

Die Harzauswahl hängt teilweise von verschiedenen Verarbeitungsgesichtspunkten ab, unter anderem leichte Handhabung, Ausmass und Art des Fliessverhaltens beim Formpressen und Härtungsgeschwindigkeit. Die Eigenschaften nach der Härtung, wie die Glasübergangstemperatur, die Feuchtigkeitsaufnahme und die Beständigkeit gegenüber thermischer und mechanischer Belastung haben ebenfalls einen Einfluss auf die Harzauswahl. Es wurde festgestellt, dass die multifunktionellen Harze den difunktionellen bei Formpressanwendungen im Hinblick auf die Eigenschaften sowohl vor als auch nach der Härtung überlegen sind. Funktionalitäten grösser als zwei sind wünschenswert, da sie die Bildung einer vernetzten Struktur beim Härten fördern. Eine solche Überlegenheit zeigt sich vor allem in den thermischen und elektrischen Eigenschaften bei erhöhten Temperaturen. Dementsprechend besitzen physikalische Abmischungen multifunktioneller und difunktioneller Harze Leistungsdaten, die an jene des reinen multifunktionellen Harzes nicht herankommen, wobei solche Unterschiede wiederum vor allem in den thermischen Leistungsdaten zu beobachten sind.

In GB-A- 2 055 843 werden beispielsweise härtbare Epoxidharzmischungen auf Basis von Bisphenol A und/oder Bisphenol F beschrieben, die als Modifizierungskomponente unter anderem auch ein Phenolnovolakepoxidharz enthalten können und als Härtungsmittel ein dreiwertiges Phenol enthalten. Beim Erhitzen gehen diese Mischungen in den vernetzten Zustand über. Ferner wird offenbart, dass auch Addukte aus bestimmten Einzelkomponenten in der härtbaren Mischung enthalten sein können, doch gehen auch solche Mischungen in den vernetzten Zustand über.

In der EP-AI- 0 006 536 werden härtbare Epoxidharzmischungen offenbart, worin ein langkettiges, lineares Epoxidharz mit einem niedermolekularen, zwei- oder dreiwertigen Epoxidharz modifiziert wird und als Härtungsmittel eine mindestens drei Phenolgruppen aufweisende Verbindung enthalten ist. Solche Mischungen gehen beim Erhitzen ebenfalls in den vernetzten Zustand über. In der US-A- 3 100 756 wird eine verbesserte Verarbeitung von Giessharzsystemen vorgeschlagen, wobei ein Gemisch aus einem multifunktionellen Glycidyläther und einem niederviskosen Diepoxid eingesetzt wird. Nach Härtung solcher Mischungen werden Produkte mit einer höheren Wärmebeständigkeit erhalten, gegenüber solchen aus mit nicht-reaktiven Lösungsmitteln oder Verdünnern viskositätserniedrigten Polyglycidyläthern.

Es sei auch bemerkt, dass die multifunktionellen Harze gewisse Nachteile aufweisen. So sind ihr Fliessverhalten und ihre Viskositätsdaten beschränkt. Nach der Hartung sind diese Massen auf Harzgrundlage stark spröde, wie durch die verringerte Zugdehnung und die höheren Biege- und Elastizitätsmoduln ausgewiesen. Diese Sprödigkeit ist ein erheblicher Nachteil, wenn die Harze beispielsweise als Einkapselmassen verwendet werden. Schliesslich besitzen diese Harze Feuchtigkeitsaufnahmeeigenschaften, die etwas zu wünschen übrig lassen. Die Wasseraufnahme einer Einkapselmasse ist beispielsweise eine äusserst wichtige Eigenschaft, da bekannterweise die Reaktion verschiedener Ionenarten, hydrolysierbaren Chlors sowie anderer in der Pressmasse vorhandener Substanzen mit kleinen Wassermengen ein Versagen einer Vorrichtung durch Korrosion verursachen können.

Dementsprechend ist die Hauptaufgabe dieser Erfindung, modifizierte feste Epoxiharzsysteme zu Verfügung zu stellen, deren Verarbeitungsverhalten und Eigenschaften nach der Härtung mit denen reiner multifunktioneller Harze zumindest vergleichbar sind. Eine weitere Aufgabe besteht darin, die Menge multifunktioneller Harze in diesen Systemen zu verringern, ohne dabei deren Leistungsdaten zu beeinträchtigen. Nach einer weiteren Aufgabe sollen feste Epoxireaktionsprodukte zur Verfügung gestellt werden, welche das Verarbeitungsverhalten und die Biegsamkeit multifunktioneller Harze verbessern.

Überraschenderweise wurde nun gefunden, dass man durch Reaktion von einer Polyepoxidverbindung mit einer Funktionalität grösser als zwei, einem Diglycidyläther eines zweiwertigen Phenols sowie einem zweiwertigen Phenol die meisten Eigenschaften des multifunktionellen Harzes erhalten sowie andere Eigenschaften verbessern und dabei trotzdem den Gehalt an solchem mulitfunktionellen Harz im System um etwa 10–40% verringern kann. Diese Systeme erleichtern es, eine hohe Flexibilität im Hinblick auf optimale Erweichungspunkte und Schmelzviskositäten für den gewünschten Endzweck zu erzielen. Dementsprechend lässt sich die Vermahlbarkeit des Harzsystems leicht auf die speziellen Erfordernisse der Praxis einstellen. Diese Eigenschaften ermöglichen es somit, die Harzsysteme speziellen Anwendungen gezielt anzupassen.

Gegenstand vorliegender Erfindung sind demnach feste vorverlängerte Epoxiharze, welche dadurch gekennzeichnet sind, dass sie aus dem durch eine katalysierte Vorverlängerungsreaktion von

(a) einem Polyepoxidharz, dessen Funktionalität grösser als zwei ist, und das der Formel

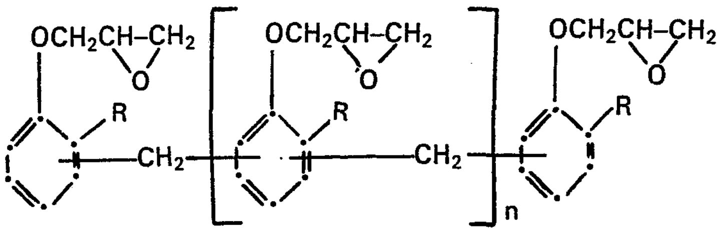

worin R für H oder $CH_3$ steht und n etwa 0,2–6,0 ist, entspricht oder den Tetraglycidyläther des Tetra-(p-hydroxyphenyl)-äthans darstellt,

(b) einem Diglycidyläther eines zweiwertigen Phenols oder dessen Alkyl- oder Halogenderivaten und

(c) einem zweiwertigen Phenol oder dessen Alkyl- oder Halogenderivaten gebildeten Reaktionsprodukt bestehen, wobei die Komponenten (a) bzw. (b) in Konzentrationsbereichen von 60–90 Gew.-% bzw. 10–40 Gew.-% sowie die Komponente (c) in einem Konzentrationsbereich von 2 bis 23%, bezogen auf das Gesamtgewicht der Komponenten (a) und (b),vorliegen.

Ähnliche Leistungsvorteile erzielt man, wenn das Harzsystem mit einem Phenolnovolakhärter und verschiedenen weiteren Bestandteilen zur Herstellung von Formmassen formuliert wird. Obwohl 10–40% des teuren multifunktionellen Harzes entfallen, bleiben in dem sich ergebenden System die thermischen und mechanischen Eigenschaften von Formsystemen ausschliesslich auf Grundlage multifunktioneller Harze im wesentlichen erhalten. Der mit multifunktionellen Harzsystemen vergleichbare Glasübergangspunkt zeigt, dass solche thermischen Eigenschaften, einschliesslich Wärmestabilität, Wärmestandfestigkeit, thermischer Ausdehnungskoeffizient, Beibehaltung der elektrischen Eigenschaften und dergleichen, erhalten geblieben sind. Zudem zeigen sich Leistungsverbesserungen der Formmassen bei Eigenschaften wie Flexibilität, Zugdehnung und Feuchtigkeitsaufnahme. So ergeben die vorliegenden Systeme höhere Prozentzahlen für die Zugdehnung und niedrigere Biege- und Elastizitätzmoduln. Sie weisen überlegene Wasser- und Feuchtigkeitsbeständigkeit auf, so dass ein Minimum an eventuell auftretenden Korrosionsproblemen und dergleichen zu erwarten ist.

Es ist somit ersichtlich, dass die vorliegenden Systeme die Vorteile eines rein multifunktionellen Harzsystems ohne die damit verbundenen ungünstigen wirtschaftlichen Faktoren aufweisen. Diese modifizierten Systeme sind in einem weiten Bereich von Formmassenanwendungen wie beispielsweise dem Einkapseln von Halbleitervorrichtungen einsetzbar. Ebenfalls kommen sie in der Herstellung von Pulverbeschichtungen, verstärkten Gegenständen und dergleichen zum Einsatz.

Verwendbare multifunktionelle Harze mit einer Funktionalität grösser als zwei entsprechen der Formel

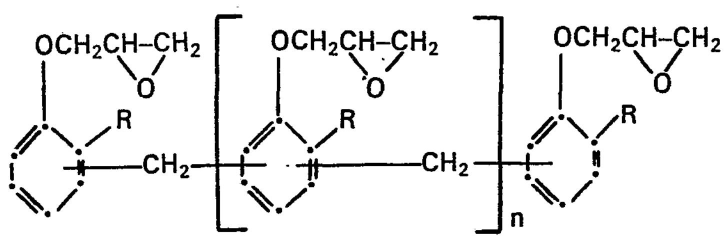

worin R für Wasserstoff oder Methyl steht und n etwa 0,2–6,0 ist. Beispiele für solche Komponenten sind die Epoxidationsprodukte von Kresolnovolaken und Phenolnovolaken verschiedenen Molekulargewichts, wobei Kresolnovolake bevorzugt sind. Die Herstellung solcher Stoffe ist dem Stand der Technik wohlbekannt, und sie sind auch im Handel erhältlich.

Ferner ist der Tetraglycidyläther des Tetra-[p-hydroxyphenyl]-äthans als multifunktionelles Harz zur Herstellung entsprechender, für Formpressanwendungen geeigneter fester Harze verwendbar. Dieser Stoff ist im Handel erhältlich.

Zu den verwendbaren Diglycidyläthern zweiwertiger Phenole zählen solche der Formel

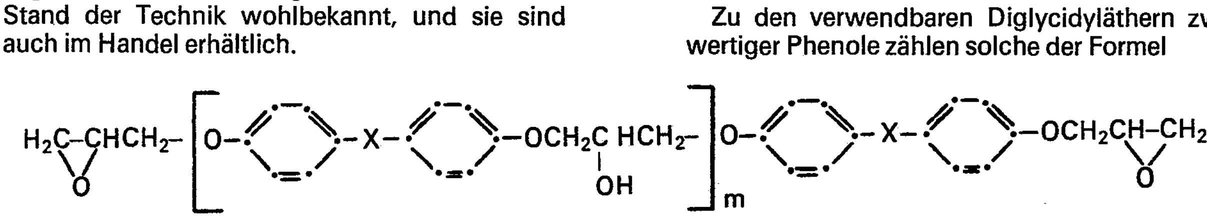

worin m 0–50 ist und X für $-CH_2-$, 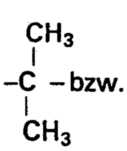 – bzw. 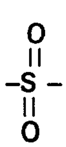 – steht.

Diese stellen die Bisphenole F, A bzw. S dar. Zu weiteren verwendbaren Äthern gehören die Diglycidyläther von Resorcin, Brenzkatechin, Hydrochinon und dergleichen. Die verschiedenen Äther sind gegebenenfalls an den jeweiligen Phenylringen mit reaktionsträgen Substituenten wie Alkyl, Halogen und dergleichen substituiert. Für Zwekke dieser Erfindung wird der Diglycidyläther von Bisphenol A und dessen tetrabromiertes Derivat bevorzugt.

Das zweiwertige Phenol dient hauptsächlich dazu, den Erweichungspunkt, die Schmelzviskosität und die Vermahlbarkeit des Harzsystems einzustellen. Dabei verwendbare Phenole sind unter anderem die in der obigen Beschreibung der diglycidylierten Äther angegebenen, natürlich ohne die Glycidyläthergruppen. Bisphenol A und dessen tetrabromiertes Derivat werden für Zwecke dieser Erfindung bevorzugt.

Die epoxihaltigen Komponenten der vorliegenden Systeme liegen vorzugsweise im Konzentrationsbereich von 65–75 Gew.-% multifunktionellem Harz und 25–35 Gew.-% Diglycidyläther vor. Das zweiwertige Phenol liegt in Konzentrationsbereichen von 2 bis 23 Gew.-%, bezogen auf das Gesamtgewicht der epoxihaltigen Komponenten, und vorzugsweise 5 bis 12 Gew.-% vor. Wie zuvor angegeben, trägt die Menge mehrwertiges Phenol zu den Grundeigenschaften der Harzsysteme bei. Wesentlich ist, dass sich die Auswahl der speziellen Menge mehrwertiges Phenol innerhalb des angegebenen Bereichs für ein bestimmtes System jeweils nach dessen Komponenten und der Notwendigkeit, vorzeitige Gelierung der Harzkomponenten zu vermeiden, richtet.

Der Reaktionsvorgang, d.h. die Vorverlängerungsreaktion, ist dem Fachmann wohlbekannt, und es handelt sich dabei im allgemeinen um die Reaktion des multifunktionellen Harzes, Diglycidyläthers und zweiwertigen Phenols in Gegenwart eines Vorverlängerungskatalysators oder Beschleunigers. Typische Beschleuniger sind unter anderem Alkalimetallhydroxide, Imidazole, Phosphoniumverbindungen und dergleichen. Die spezielle Wahl des Katalysators hängt vom beabsichtigten Anwendungszweck ab. Um den anfänglichen Mischvorgang zu erleichtern, ist es vorzuziehen, das multifunktionelle Harz und den Diglycidyläther auf etwa 80–100 °C zu erwärmen und dann das zweiwertige Phenol zuzusetzen. Rühren zu diesem Zeitpunkt ergibt eine klare Mischschmelze. Dann gibt man den Katalysator dazu und erhöht die Temperatur auf 140–180 °C, um die Vorverlängerungsreaktion einzuleiten. Der Verlauf der Reaktion lässt sich durch Titrieren der Epoxidgruppen in während der Reaktion gezogenen Proben verfolgen. Im allgemeinen sind 1 bis 6 Stunden für eine vollständige Reaktion zu Harzsystemen mit Epoxizahlen im Bereich von 0,2–0,5 Epoxiäquivalenten auf 100 Gramm Harz erforderlich.

Die erhaltenen vorverlängerten Harze sind fest und besitzen im allgemeinen einen Erweichungsbereich von 60–95 °C, einen Schmelzviskositätsbereich von 700–15 000 Centipoise bei 130 °C und, wie oben angegeben, einen Epoxizahlbereich von 0,2–0,5 Epoxiäquivalenten auf 100 Gramm Harz.

Je nach dem gewünschten Anwendungszweck formuliert man das Harz mit den entsprechenden Bestandteilen und bringt es mit den jeweiligen Härter- und Beschleunigerkomponenten zusammen. Im Hauptanwendungsgebiet der vorliegenden Harzsysteme als Formmassen setzt man Novolakhärter ein. Bei diesen Härtern kann es sich unter anderem um Phenol- oder Kresolnovolake wie die oben definierten multifunktionellen Harze ohne die Epoxigruppen handeln. Solche Novolake sind bekannt und werden weithin bei der Herstellung von Einkapselsystemen verwendet. Der Härter wird in Konzentrationen im Bereich von etwa 25 bis 40 Gew.-% auf das gesamte vorverlängerte Harz eingesetzt.

Zusätzlich kann man die Harz/Härtersysteme vor der Härtung mit üblichen Modifikationsmitteln wie Streckmitteln, Füllstoffen und Verstärkungsmitteln, Pigmenten, Farbstoffen, Weichmachern, Verdünnungsmitteln und Beschleunigern vermischen. Als in den erfindungsgemässen, härtbaren Systemen verwendbare Streckmittel, Verstärkungsmittel, Füllstoffe und Pigmente seien beispielsweise genannt: Steinkohlenteer, Bitumen, Glasfasern, Kohlenstoffasern, Cellulose, Polyäthylenpulver, Polypropylenpulver, Glimmer, Asbest, verschiedene Quarzmehle, Quarzgläser, Silikate, Silane, Magnesium- und Calciumcarbonat, Gips, Bentonite, Kieselsäureärogel («Aerosil»), Lithopone, Baryt, Titandioxid, Russ, Graphit, Eisenoxid oder Metallpulver wie Aluminium- oder Eisenpulver. Auch kann man weitere übliche Zusatzstoffe, beispielsweise Flammschutzmittel wie Antimontrioxid, Thixotropiemittel, Verlaufmittel wie Silikone, Celluloseacetobutyrat, Polyvinylbutyral, Wachse und Stearate (die teilweise auch als Formtrennmittel verwendet werden) zu den härtbaren Systemen zugeben. Die zugesetzten Beschleuniger können mit den Vorverlängerungskatalysatoren identisch sein oder auch Bortrifluorid/Monoäthylaminkomplexe und tertiäre Amine einschliessen.

Die Endprodukte lassen sich in der herkömmlichen Weise mit Hilfe bekannter Mischeinrichtungen (Kneter, Extruder und Walzen herstellen. Zum Zweck der Herstellung von Formmassen besteht eine nützliche Methode darin, dass man beheizte Zweiwalzenmischer einsetzt, worin das Harzsystem bzw. das Härtersystem getrennt mit Füllstoff kombiniert und gewalzt werden, und die gebildeten Phasen auf die gewünschte Grösse vermahlen und dann vermischt werden.

Die Härtung wird im allgemeinen bei Temperaturen im Bereich von 140 bis 185 °C durchgeführt. Der Ausdruck «Härtung», wie hier verwendet, bedeutet die Umwandlung der obigen Systeme in unlösliche und unschmelzbare vernetzte Produkte unter gleichzeitiger Verformung zu Formteilen wie Formkörpern, Presslingen oder Schichtkörpern, bzw. zu Flächengebilden wie Beschichtungen, Einbrennlacken oder Klebverbindungen.

Obwohl hier die Verwendung des vorliegenden

Harzsystems für Formmassen betont wurde, sei bemerkt, dass man sie ebenfalls zur Herstellung von Pulverbeschichtungen, verstärkten Gegenständen (Substraten) und dergleichen einsetzen kann. In diesen weiteren Anwendungsgebieten kann man zusätzliche Härter wie Dicyandiamid, Polyester, Anhydride und aromatische Amine einsetzen. Dabei in Pulverbeschichtungsmassen erzielte Vorteile sind unter anderem die chemische und thermische Beständigkeit. Typische Pulverbeschichtungsmassen enthalten Harz, Härter, Beschleuniger, Pigment und Verlaufmittel. Die Herstellung und Verarbeitung solcher Pulverbeschichtungen sind dem Fachmann bekannt.

Die nachfolgenden Beispiele sollen Ausführungsformen der vorliegenden Erfindung näher erläutern. Dabei sind Teile stets Gewichtsteile, falls nicht anders angegeben.

Beispiel I

Dieses Beispiel erläutert die Herstellung eines typischen erfindungsgemässen Harzsystems.

Die folgenden Kompenenten werden eingesetzt:

| Formulierung A | Teile |
|---|---|
| Epoxikresolnovolak (1) | 70 |
| Bisphenol-A-diglycidyläther (2) | 30 |
| Bisphenol A | 11 |

(1) Epoxizahl = 0,44 val/100 q, Erweichungspunkt = 82 °C und Viskosität bei 130 °C = 5,7 Pa·s
(2) Epoxizahl = 0,52 val/100 g, Viskosität bei 25 °C = 17 Pa·s

Man vermischt den Epoxikresolnovolak mit dem Diglycidyläther und erwärmt auf 80 °C, bis sich ein einheitliches Gemisch bildet. Dann wird das Bisphenol-A unter Bildung einer klaren Mischschmelze eingemischt. Danach gibt man 40 ppm 2-Phenylimidazolkatalysator dazu, steigert die Temperatur auf 160 °C und lässt die Vorverlängerung über einen Zeitraum von 3 Stunden ablaufen. Für das erhaltene feste Epoxiharzsystem erhält man bei der Bestimmung eine Epoxizahl von 0,34 pro 100 Gramm sowie einen Erweichungspunkt von 80 °C und eine Schmelzviskosität von 10,7 Pa·s bei 130 °C.

Beispiel II

Die folgenden Harzsysteme werden nach der Arbeitsweise von Beispiel I hergestellt.

| | Teile | | | | | |
|---|---|---|---|---|---|---|
| | B | C | D | E | F | G |
| Epoxikresolnovolak (1) | – | 60 | 80 | – | – | – |
| Epoxikresolnovolak (3) | 70 | – | – | – | – | – |
| Epoxikresolnovolak (4) | – | – | – | 75 | – | – |
| Epoxikresolnovolak (5) | – | – | – | – | 75 | – |
| Tetraglycidyläther des Tetra-[p-hydroxyphenyl]-äthans (6) | – | – | – | – | – | 70 |
| Bisphenol-A-diglycidyläther (2) | – | 40 | 20 | 25 | 25 | 30 |
| Bisphenol-A-diglycidyläther (7) | 30 | – | – | – | – | – |
| Bisphenol-A | 9 | 15 | 8 | 22,3 | 22,3 | 8 |

(3) Epoxizahl = 0,46 val/100 g, Erweichungspunkt = 73 °C, Viskosität bei 130 °C = 1,9 Pa·s
(4) Epoxizahl = 0,47 val/100 g, viskose Flüssigkeit bei Raumtemperatur.
(5) Epoxizahl = 0,56 val/100 g, viskose Flüssigkeit bei Raumtemperatur.
(6) Epoxizahl = 0,55 val/100 g, Erweichungspunkt = 60 °C.
(7) DER ® 331, Dow Chemical Corporation.

Diese Harzsysteme besitzen die folgenden Kenndaten:

| Formulierung | Epoxizahl/100 g | Erweichungspunkt (°C) |
|---|---|---|
| B | 0,37 | 75 |
| C | 0,30 | 91 |
| D | 0,35 | 90–91 |
| E | 0,24 | 83 |
| F | 0,30 | 85 |
| G | 0,41 | 72,5 |

Beispiel III

Dieses Beispiel erläutert die Herstellung von Formmassen mit den erfindungsgemässen Harzsystemen.

Die folgenden Formulierungen werden hergestellt:

| | Teile | | | | | | | |
|---|---|---|---|---|---|---|---|---|
| | 1 | 2 | 3 | 4 | 5 | 6 | 7 | 8 |
| Harz A | 100 | – | – | – | – | – | 100 | – |
| Harz B | – | 100 | – | – | – | – | – | – |
| Harz C | – | – | 100 | – | – | – | – | – |
| Harz D | – | – | – | 100 | – | – | – | – |
| Harz E | – | – | – | – | 100 | – | – | – |
| Harz F | – | – | – | – | – | 100 | – | – |
| Harz G | – | – | – | – | – | – | – | 100 |
| Novolakhärter (8) | 30 | 33 | 27,6 | 32,2 | 21,8 | 27,3 | 30,7 | 37,3 |
| Wachs (Trennmittel) | 1 | 1 | 1 | 1 | 1 | 1 | 1 | 1 |
| Imidazol (Beschleuniger) | 1 | 1 | 1 | 1 | 1 | 1 | 1 | 1 |
| Quarzfüllstoff (9) | 244 | 249 | 241 | 249 | 230 | 240 | 246 | 260 |

(8) BRWE ® 5833 (fester Phenolnovolak mit 1 OH-Gruppe/100 g), Union Carbide Corporation,

(9) NOVACITE ® 325, Malvern Mineral Corporation.

Dabei werden die Formmassen jeweils mittels eines beheizten Zweikomponenten-Zweiwalzenmischers hergestellt. Bei der ersten Phase handelt es sich um die Vermischung der Harzkomponenten mit 65 Gew.% des Füllstoffs und das Walzen der Mischung auf dem beheizten Zweiwalzenmischer bei 85–100 °C. Die zweite Phase umfasst die Vermischung des verbleibenden Füllstoffs mit dem Beschleuniger, Härter und Trennmittel sowie das Walzen der Mischung auf dem beheizten Zweiwalzenmischer bei 95–100 °C. Die Phasen werden dann getrennt, in einer Hammermühle zerkleinert und durch Kugelmahlung bei Raumtemperatur in den entsprechenden Anteilen gleichmässig vereinigt, unter Bildung der fertigen Formmassenformulierung.

Vergleichssysteme, die reines multifunktionelles Harz bzw. physikalische Mischungen von multifunktionellem Harz und glycidyliertem zweiwertigen Phenol darstellen, werden entsprechend durch Vermahlen aller Komponenten und anschliessende Vereinigung in den gewünschten Verhältnissen unter Verwendung einer Kugelmühle hergestellt. Diese Vergleichssysteme sind wie folgt zusammengesetzt:

| | Teile | | | | | |
|---|---|---|---|---|---|---|
| | 9 | 10 | 11 | 12 | 13 | 14 |
| Epoxikresolnovolak (1) | 100 | 75 | 50 | 25 | – | – |
| Tetraglycidyläther (6) | – | – | – | – | – | 100 |
| Diglycidylierter Äther von Bisphenol-A | – | 25 | 50 | 75 | 100 | – |
| Novolakhärter (40) | 40 | 34,6 | 29,1 | 23,6 | 18,2 | 50,0 |
| Imidazol | 1 | 1 | 1 | 1 | 1 | 1 |
| Wachs | 1 | 1 | 1 | 1 | 1 | 1 |
| Füllstoff (9) | 264 | 254 | 243 | 233 | 223 | 282,3 |

Die erfindungsgemässen Systeme und die Vergleichssysteme werden dann verschiedenen Testverfahren unterzogen.

Glasübergangspunkt

Probestücke für diesen Test werden durch Spritzpressen der Probe und dann 4 Stunden Nachhärtung bei 175 °C hergestellt. Die Glasübergangspunkte werden durch thermomechanische Analyse im Ausdehnungsgang bestimmt, wobei man folgende Ergebnisse erhält:

| Nr. | Glasübergangspunkt ( °C) |
|---|---|
| 1 | 151 |
| 2 | 149 |
| 3 | 137 |
| 4 | 144 |
| 5 | 115 |
| 6 | 130 |
| 7 | 147 |
| 8 | 152 |
| 9 | 147 |
| 10 | 140 |
| 11 | 132 |
| 12 | 123 |
| 13 | 110 |
| 14 | 147 |

Man sieht, dass in den meisten Fällen die Glasübergangspunkte der erfindungsgemässen Systeme mit denen der multifunktionellen Harze (Nr. 8 und Nr. 14) vergleichbar sind, was zeigt, dass die günstigen thermischen Eigenschaften des multifunktionellen Harzes trotz der Abnahme in dessen Konzentration erhalten geblieben sind. Es ist ferner wichtig, darauf hinzuweisen, dass ein im wesentlichen gleicher Prozentsatz multifunktionelles Harz in der Harzvorverlängerungsformulierung (Nr. 1) einen höheren Glasübergangspunkt ergibt als in der Harzmischung (Nr. 10).

Physikalisch/mechanische Eigenschaften

Biegungs-, Zugfestigkeits- bzw. Zugdehnungsdaten für die verschiedenen Systeme werden bei Raumtemperatur nach ASTM-Testmethoden D-790 bzw. D-638 erhalten. Die Wärmestandfestigkeiten werden nach ASTM D-648 bestimmt. Die Ergebnisse sind hierunter angegeben:

| | Nr. 1 | Nr. 2 | Nr. 9 |
|---|---|---|---|
| Biegefestigkeit (MPa) | 82,38 | 95,13 | 88,26 |
| Biegemodul (GPa) | 0,961 | 1,098 | 11,768 |
| Zugfestigkeit (MPa) | 69,63 | 63,94 | 56,88 |
| Elastizitätsmodul (GPa) | 10,297 | 10,297 | 10,984 |
| Zugdehnung (%) | 0,70 | 0,70 | 0,59 |
| Wärmestandfestigkeit (°C) | 201 | 201 | 203 |

Die Ähnlichkeit bei den meisten Werten gibt einen weiteren Hinweis darauf, dass die Harzsysteme der vorliegenden Erfindung vergleichbare mechanische Eigenschaften ergeben wie solche auf der Grundlage von reinem multifunktionellem Harz. Es sei jedoch betont, dass die entsprechenden Werte für den Biegemodul bei Raumtemperatur und die % Zugdehnung bei Raumtemperatur deutlich zeigen, dass die vorliegenden Systeme verbesserte Biegsamkeits- und Dehnungseigenschaften aufweisen.

Feuchtigkeitsaufnahme

Verpresste Proben werden gewogen, unter den in der nachfolgenden Tabelle angegebenen Bedingungen ausgesetzt und dann zur Bestimmung der Feuchtigkeitsaufnahme zurückgewogen.

| | Prozent Gewichtszunahme | | | |
|---|---|---|---|---|
| Testbestimmungen | Nr. 1 | Nr. 2 | Nr. 9 | Nr. 13 |
| 24 Stunden bei Raumtemperatur völlig eingetaucht | 0,05 | 0,04 | 0,04 | 0,06 |
| 48 Stunden bei 40 °C völlig eingetaucht | 0,27 | 0,29 | 0,32 | 0,33 |
| 24 Stunden in Dampf bei 121 °C und 1,05 bar | 1,42 | 1,31 | 1,52 | 1,51 |

Wiederum ist ersichtlich, dass die vorliegenden Systeme verbesserte Leistungsdaten für eine wichtige Grösse aufweisen. So zeigen die Kontrollen Nr. 9 und Nr. 13 erhöhte Feuchtigkeitsaufnahme, insbesondere bei den schärferen Testbestimmungen.

Zusammenfassend ist es ersichtlich, dass diese Erfindung neuartige, ausgezeichnete Leistungsdaten besitzende feste Epoxiharzsysteme ergibt. Die Anteile, Arbeitsweisen und Materialien lassen sich abändern, ohne dabei von dem in den nachfolgenden Ansprüchen definierten Schutzumfang der Erfindung abzuweichen.

**Patentansprüche**

1. Feste vorverlängerte Epoxiharze, dadurch gekennzeichnet, dass sie aus dem durch eine katalysierte Vorverlängerungsreaktion von

(a) einem Polyepoxidharz, dessen Funktionalität grösser als zwei ist, und das der Formel

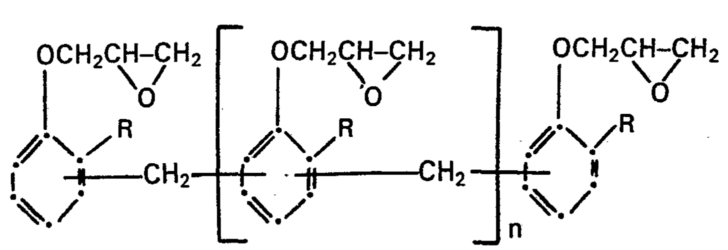

worin R für H oder $CH_3$ steht und n etwa 0,2–6,0 ist, entspricht oder den Tetraglycidyläther des Tetra-[p-hydroxyphenyl]-äthans darstellt,

(b) einem Diglycidyläther eines zweiwertigen Phenols oder dessen Alkyl- oder Halogenderivaten und

(c) einem zweiwertigen Phenol oder dessen Alkyl- oder Halogenderivaten gebildeten Reaktionsprodukt bestehen, wobei die Komponenten (a) bzw. (b) in Konzentrationsbereichen von 60–90 Gew.-% bzw. 10–40 Gew.-% sowie die Komponente (c) im Konzentrationsbereich von 2 bis 23% bezogen auf das Gesamtgewicht der Komponenten (a) und (b) vorliegen.

2. Harzprodukte nach Anspruch 1, dadurch gekennzeichnet, dass als Komponente (a) das Epoxidationsprodukt von Kresolnovolaken vorliegt.

3. Harzprodukte nach Anspruch 1, dadurch gekennzeichnet, dass als Komponente (a) der Tetraglycidyläther des Tetra-[p-hydroxyphenyl]-äthans vorliegt.

4. Harzprodukte nach Anspruch 1, dadurch gekennzeichnet, dass die Komponente (b) aus der Gruppe der Diglycidyläther von Bisphenolen der Formel

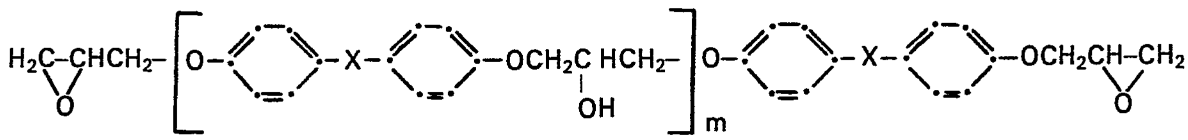

worin m 0–50 ist und X für $-CH_2-$, 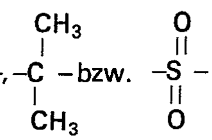 bzw. –steht. ausgewählt ist.

5. Harzprodukte nach Anspruch 2 oder 3, dadurch gekennzeichnet, dass als Komponente (b) der Glycidyläther von Bisphenol-A vorliegt.

6. Harzprodukte nach Anspruch 1, dadurch gekennzeichnet, dass als Komponente (c) Bisphenol-F, -A oder -S vorliegt.

7. Harzprodukte nach Anspruch 5, dadurch gekennzeichnet, dass als Komponente (c) Bisphenol-A vorliegt.

8. Harzprodukte nach Anspruch 1, dadurch gekennzeichnet, dass die Komponente (a) in einer Konzentration von 65–75 Gew.-% vorhanden ist.

9. Harzprodukte nach Anspruch 6, dadurch gekennzeichnet, dass die Komponente (c) in einer Konzentration von 5–12%, bezogen auf das Gesamtgewicht der Komponenten (a) und (b), vorhanden ist.

10. Heisshärtbare Massen, dadurch gekennzeichnet, dass sie aus einem Harzprodukt nach Ansprüchen 1 bis 9 und einem Härter für Epoxiharze bestehen.

**Revendications**

1. Résines époxydes préallongées solides, caractérisées en ce qu'elles sont constituées par le produit de la réaction formé par une réaction de préallongement catalysée de:

(a) une résine polyépoxydique dont le degré de fonctionnalité est supérieur à 2, de formule:

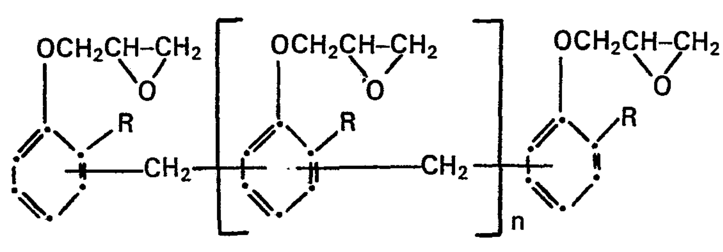

dans laquelle R désigne l'hydrogène ou le groupe $CH_3$ et n un nombre d'environ 0,2 à 6,0, ou bien l'éther tétraglycidylique du tétra-(p-hydroxyphényl)-éthane, avec

(b) un éther diglycidylique d'un diphénol ou d'un dérivé alkylé ou halogéné de celui-ci, et

(c) un diphénol ou un dérivé alkylé ou halogéné de celui-ci, les composantes (a) et (b) étant à des concentrations respectives de 60 à 90 et 10 et 40% en poids, et la composante (c) à une concentration de 2 à 23%, par rapport au poids total des composantes (a) et (b).

2. Produits résineux selon la revendication 1 caractérisés en ce que la composante (a) est le produit d'époxydation de novolaques crésoliques.

3. Produits résineux selon la revendication 1 caractérisés en ce que la composante (a) est l'éther tétraglycidylique du tétra-(p-hydroxyphényl)-éthane.

4. Produits résineux selon la revendication 1 caractérisés en ce que la composante (b) est prise dans le groupe des éthers diglycidyliques de bisphénols de formule:

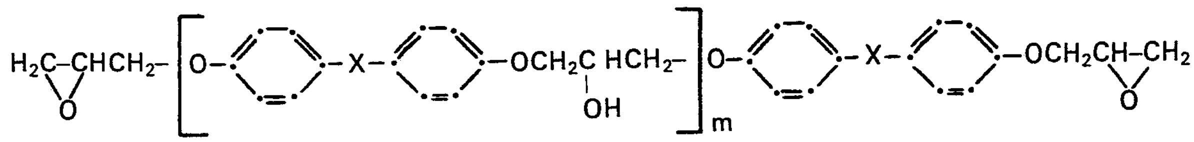

dans laquelle m est un nombre de 0 à 50 et X le groupe 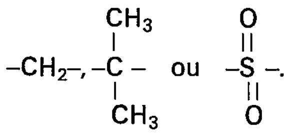 ou .

5. Produits résineux selon la revendication 2 ou 3, caractérisés en ce que la composante (b) est l'éther glycidylique du bisphénol A.

6. Produits résineux selon la revendication 1, caractérisés en ce que la composante (c) est le bispénol F, A ou S.

7. Produits résineux selon la revendication 5, caractérisés en ce que la composante (c) est le bisphénol A.

8. Produits résineux selon la revendication 1, caractérisés en ce que la composante (a) est à une concentration de 65 à 75% en poids.

9. Produits résineux selon la revendication 6, caractérisés en ce que la composante (c) est à une concentration de 5 à 12% du poids total des composantes (a) et (b).

10. Matières thermodurcissables caractérisées en ce qu'elles comprennent un produit résineux selon l'une quelconque des revendications 1 et 9 avec un durcisseur de résines époxydes.

**Claims**

1. A solid advanced epoxy resin comprising the reaction product resulting from a catalyzed advancement reaction of

(a) a polyepoxide resin having a functionality greater than two, said resin corresponding to the formula

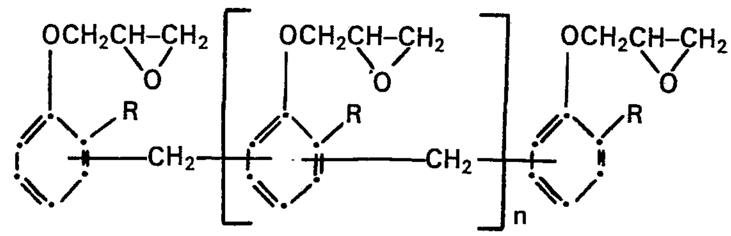

wherein R is H or $CH_3$ and n is about 0.2–6.0, or being the tetraglycidyl ether of tetra-[p-hydroxyphenyl]ethane;

(b) a diglycidyl ether of a dihydric phenol or the alkyl or halogen derivatives thereof; and

(c) a dihydric phenol or the alkyl or halogen derivatives thereof; components (a) and (b) being present in concentration ranges of from 60–90% by weight and 10–40% by weight respectively, and component (c) being present in a concentration range of from 2 to 23%, based on the total weight of components (a) and (b).

2. A resin product according to claim 1, wherein component (a) is the epoxidation product of cresol novolacs.

3. A resin product according to claim 1, wherein component (a) is the tetraglycidyl ether of tetra-[p-hydroxyphenyl]ethane.

4. A resin product according to claim 1, wherein component (b) is selected from the group consisting of diglycidyl ethers of bisphenols corresponding to the formula

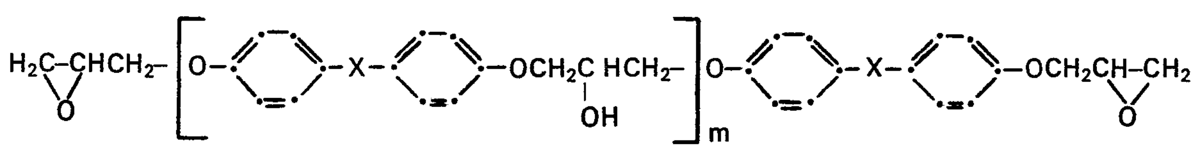

wherein m is 0–50 and X is 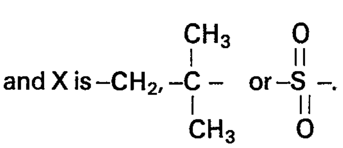 or .

5. A resin product according to either of claims 2 or 3, wherein component (b) is the diglycidyl ether of bisphenol A.

6. A resin product according to claim 1, wherein component (c) is bisphenol F, A or S.

7. A resin product according to claim 5, wherein component (c) is bisphenol A.

8. A resin product according to claim 1, wherein component (a) is present in a concentration of 65–75% by weight.

9. A resin product addording to claim 6, wherein component (c) is present in a concentration of 5–12%, based on the total weight of components (a) and (b).

10. A heat curable composition which comprises a resin product according to any one of claims 1 to 9 and a hardener for epoxy resins.